# EUROPÄISCHE PATENTSCHRIFT

(11) **EP 2 163 326 B1**
(45) Veröffentlichungstag und Bekanntmachung des Hinweises auf die Patenterteilung: **12.01.2011**
(21) Anmeldenummer: 09011131.1
(22) Anmeldetag: 31.08.2009
(51) Int. Cl.: B21D 53/08, C21D 1/22, C21D 6/02, C22F 1/10, B21D 53/06

(54) **Verfahren zur Herstellung und Montage von Überhitzer-Rohrschlangen von Dampferzeugern**
Method for manufacturing and fitting superheater coils of steam creation devices
Procédé de fabrication et de montage de tubes en serpentins de surchauffe d'émetteurs de vapeur

(30) Priorität: 16.09.2008 DE 102008047329
(43) Veröffentlichungstag der Anmeldung: 17.03.2010
(73) Patentinhaber: Alstom Technology Ltd, 5401 Baden (CH)
(72) Erfinder: Hartwig, Ruben, 89150 Laichingen (DE); Helmrich, Andreas, 73630 Remshalden (DE); Mutter, Daniel, 70329 Stuttgart (DE); Schalk, Alois, 91589 Weinberg-Aurach (DE)

(56) Entgegenhaltungen:
- EP-A1- 0 819 775
- EP-A2- 0 478 374
- WO-A1-2005/090862
- DE-A1- 2 437 690
- JP-A- 8 082 455
- JP-A- 2002 257 496
- US-A- 4 639 992
- US-A1- 2005 072 500

## Beschreibung

Die Erfindung bezieht sich auf ein Verfahren zur Herstellung und Montage von Überhitzer-Rohrschlangen von Dampferzeugern.

Überhitzer-Rohrschlangen werden vorwiegend in Dampferzeugern von mit fossilen Brennstoffen beheizten Kraftwerken eingesetzt. Die Überhitzer-Rohrschlangen werden dabei als Heizflächen in einem von Rohrwänden umfassten Gaszug angeordnet, der sich in Strömungsrichtung des Verbrennungsabgases gesehen stromabwärts der mit Brennern ausgebildeten Brennkammer befindet, wobei der Querschnitt des Gaszuges sowie der Brennkammer in den meisten Fällen rechteckig ausgebildet ist. Die Rohre der Überhitzer-Rohrschlangen, die aus verschweißten Geradrohren und Ausbiegungen und ggf. weiteren Anschweißteilen gebildet sind, führen ein durch die Verbrennung des fossilen Brennstoffes erhitztes bzw. in den Überhitzer-Rohrschlangen überhitztes Arbeitsmedium mit sich und geben es an weitere Prozesse weiter. Bei den bekannten geschweißten Überhitzer-Rohrschlangen werden üblicherweise 9-12% haltige Chrom-Stähle mit anschließender Wärmebehandlung und/oder austenitische Stähle sowie nichtausscheidungshärtende Nickelbasislegierungen im lösungsgeglühten Zustand, die in der Regel keine Wärmebehandlung erfordern, eingesetzt.

EP 0 819 775-A1 zeigt ein Verfahren zur Herstellung von. Überhitzer Rohre aus ausscheidungshärtenden Nickelbasislegierungen für Dampferzeusen.

Der Wunsch nach Dampferzeugern mit höheren Wirkungsgraden und die bezüglich des Arbeitsmediums Dampf daraus resultierende Entwicklung des "700 °C Kraftwerkes" zur Wirkungsgradssteigerung, die unter anderem den CO₂-Ausstoß in die Atmosphäre verringern helfen, führt unter anderem zur Erhöhung der Dampfparameter des Dampferzeugers. Die Erzielung bzw. Realisierung von höheren Dampfparameter, d.h. höheren Drücken und Temperaturen des Arbeitsmediums Dampfes, stellt hohe Anforderungen an die im Dampferzeuger einzusetzenden Werkstoffe. Diese Anforderungen können die derzeit eingesetzten Werkstoffe nicht erfüllen. Eine Weiterentwicklung der Werkstoffe und ihrer Verarbeitung ist somit unumgänglich. Als geeignete Werkstoffe zur Realisierung höherer Dampfparameter an Überhitzer-Rohrschlangen bieten sich ausscheidungshärtende Nickelbasislegierungen an. Diese Legierungstypen erfordern in jedem Fall eine Wärmebehandlung des kompletten Rohres, sowohl der Schweiß- und Biegebereiche als auch des Grundrohres der Überhitzer-Rohrschlangen.

Die vorliegende Erfindung hat sich als Aufgabe gestellt, ein Verfahren zur Herstellung und Montage von Überhitzer-Rohrschlangen von Dampferzeugern vorzuschlagen, bei der deren Herstellung und Montage in effizienter und praktikabler Weise erfolgt. Insbesondere ist es Aufgabe der Erfindung, ein Verfahren für die Fertigungs- und Montageabfolge sowie insbesondere der Wärmebehandlung von Überhitzer-Rohrschlangen sowie deren Verbindungsrohre aus überwiegend ausscheidungshärtenden Nickelbasislegierungen zu entwickeln, wobei dieses Verfahren auch Konzepte mit einschließen soll, bei denen auf eine aufwändige Wärmebehandlung verzichtet oder diese zumindest auf ein Minimum beschränkt werden kann.

Die vorstehend genannte Aufgabe wird durch das Verfahren gemäß der Merkmale des Patentanspruches 1 gelöst.

Vorteilhafte Ausgestaltungen der Erfindung sind den Unteransprüchen zu entnehmen.

Durch die erfindungsgemäße Lösung wird ein Verfahren zur Herstellung von Überhitzer-Rohrschlangen von Dampferzeugern geschaffen, das die nachfolgenden Vorteile aufweist:
- Effiziente und praktikable Machbarkeit der Herstellung von Überhitzer-Rohrschlangen von Dampferzeugern,
- Steigerung des Dampferzeugerwirkungsgrades durch Realisierung höherer Dampfparameter,
- Verringerung des CO₂-Ausstoßes in die Atmosphäre durch Steigerung des Dampferzeugerwirkungsgrades.

Eine vorteilhafte Ausbildung der Erfindung sieht vor, dass die Ausbiegungen und die gebogenen Verbindungsrohre nach deren Fertigung und vor der Fertigung der einzelnen Rohrschlangen in einer dritten Heizeinrichtung lösungsgeglüht werden. Damit können Einflüsse auf das Werkstoffgefüge aus der Kaltverformung eliminiert werden.

In vorteilhafter Ausgestaltung der Erfindung werden zusätzlich während der Fertigung der einzelnen Rohrschlangen das oberste und unterste Geradrohr einer Rohrschlange mit einer Panzerung ausgebildet. Durch die Panzerung kann eine Erosion an dem obersten und untersten Rohr der Rohrschlange verhindert werden, die ansonsten beispielsweise durch das Rußblasen der Rohrschlangen eintreten kann.

Eine weitere vorteilhafte Ausgestaltung der Erfindung sieht vor, dass das Ausscheidungshärten bei einer Temperatur von 785 bis 815° C erfolgt sowie in weiterer vorteilhafter Ausbildung der Erfindung das Ausscheidungshärten sich über eine Zeitspanne von etwa 4 Stunden erstreckt. Damit wird ein einwandfreies Ausscheidungshärten der zu wärmebehandelnden Bauteile gewährleistet.

Vorteilhaft ist es, das Lösungsglühen bei einer Temperatur von 1105 bis 1135° C durchzuführen sowie in weiterer vorteilhafter Ausbildung der Erfindung das Lösungsglühen über wenige Minuten durchzuführen. Damit wird ein einwandfreies Lösungsglühen der zu wärmebehandelnden Bauteile gewährleistet.

Nachstehend sind Ausführungsbeispiele der Erfindung an Hand der Zeichnungen und der Beschreibung näher erläutert.

Es zeigt:
- Fig. 1: eine in der Ansicht schematisch dargestellte Überhitzer-Rohrschlange (Heizfläche) innerhalb der Rohrwände eines Dampferzeugers mit Verbindungsrohren zu den angedeuteten Verteilern und Sammlern,
- Fig. 2: schematisch dargestellt im Längsschnitt das Detail "A" aus der Figur 1,
- Fig. 3: schematisch dargestellt im Längsschnitt das Detail "B" aus der Figur 1.

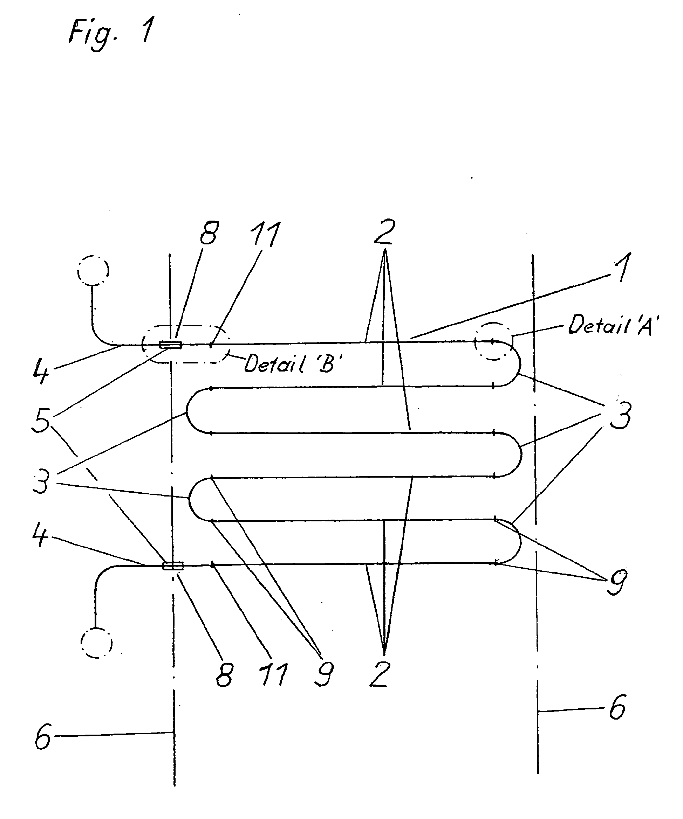

Figur 1 zeigt schematisch dargestellt exemplarisch eine fertig hergestellte und innerhalb der Rohrwände 6 eines nicht dargestellten Dampferzeugers angeordnete und montierte Überhitzer-Rohrschlange bzw. Überhitzer-Heizfläche 1 einschließlich der durch die Rohrwände 6 hindurchtretenden Verbindungsrohre 4 auf. Der Ordnung halber wird darauf hingewiesen, dass innerhalb der Rohrwände 6 eine Vielzahl der in Figur 1 dargestellten einen Überhitzer-Rohrschlange 1 angeordnet sind. Die Überhitzer-Rohrschlange 1 ist aus mehreren Geradrohren 2 und Ausbiegungen 3 werkstattseitig gefertigt und wird auf der Baustelle, d.h. montageseitig, mit den durch die Rohrwände 6 hindurchtretenden Verbindungsrohren 4 verschweißt. Die Verbindungsrohre 4 selbst sind außerhalb der Rohrwände 6 mit nicht dargestellten Verteil- und Sammeleinrichtungen verbunden, mittels der das im Dampferzeuger zirkulierende Arbeitsmedium, in der Regel Wasser bzw. Dampf bzw. ein Gemisch aus Wasser und Dampf, den Überhitzer-Rohrschlangen 1 zu- bzw. abgeführt werden kann. Das Verfahren zur Herstellung der Überhitzer-Rohrschlangen 1 weist die nachfolgenden Schritte auf:

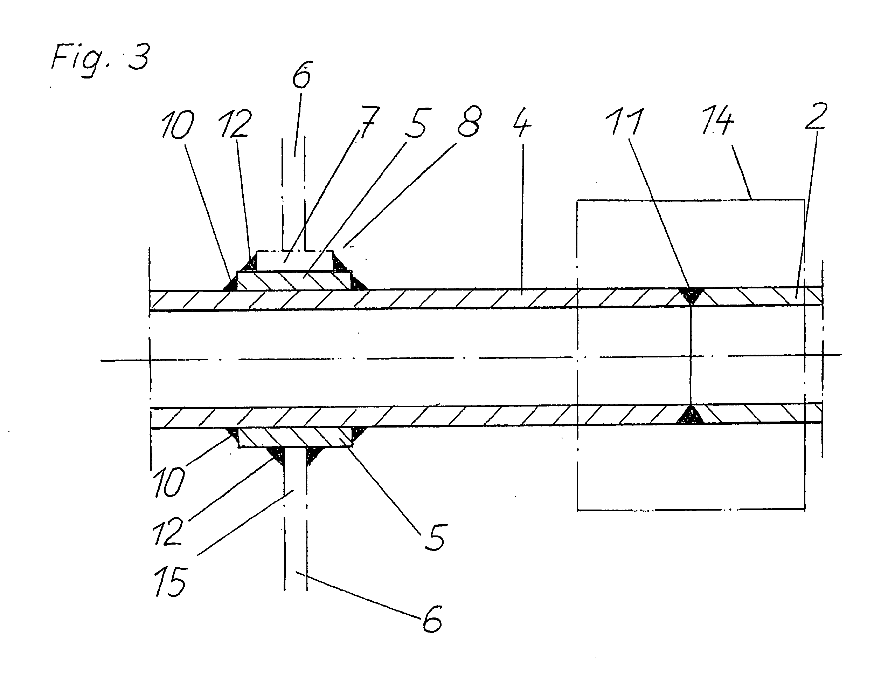

Zuerst werden die Geradrohre 2 sowie weitere gerade Rohre, die bei einem späteren Verfahrensschritt zu Ausbiegungen 3 und zu Verbindungsrohren 4 gefertigt werden, bereitgestellt. Um den hohen Anforderungen, gegeben durch die erhöhten Dampfparameter, an den Werkstoff der vorgenannten Bauteile 2, 3, 4 gerecht zu werden, werden für die Bauteile 2, 3, 4 ausscheidungshärtende Nickelbasislegierungen bereitgestellt, die sich in einem lösungsgeglühten Zustand befinden. In der Regel entsprechen die Rohrdurchmesser sowie die Wanddicken der für die Ausbiegungen 3 und Verbindungsrohre 4 verwendeten Rohre dem Durchmesser und der Wanddicke der Geradrohre 2. Ferner werden Hülsen 5 bereitgestellt, die aus einem Werkstoff bestehen, der nicht wärmebehandelt werden muss. Dabei weisen die Innendurchmesser der Hülsen 5 einen geringfügig größeren Durchmesser als den Außendurchmesser des Verbindungsrohres 4 auf, um die Hülse 5 auf das Verbindungsrohr 4 schieben zu können. Die Länge der Hülse 5 ist vorteilhaft etwas länger ausgebildet als die in der Rohrwand 6 angeordnete und als Aufnahmemittel und für die Verbindung der Hülse 5 vorgesehene Hülse 7 (siehe Figur 3, obere Hälfte des Längsschnittes). Durch den längenseitigen Versatz dieser beiden Hülsen 5, 7 kann beim späteren Verschweißen der beiden Hülsen 5, 7 eine einfach anzubringende Kehlnaht angebracht werden. Anstelle der Hülse 7 kann auch ein in der Rohrwand 6 zum Ausfüllen einer Rohrausbiegung eingesetztes Füllblech 15 als Aufnahmemittel des Verbindungsrohres 4 und deren Hülse 5 benutzt werden (siehe Figur 3, untere Hälfte des Längsschnittes). Sowohl die Hülse 7 wie auch das Füllblech 15 werden aus einem nicht wärmezubehandelnden Werkstoff vorgesehen.

Hinsichtlich der Verwendung bzw. des Einsatzes von nicht wörmezubehandelnden Werkstoffen sind Werkstoffe gefragt bzw. gemeint, die nach deren Verschweißen mit den zu verbindenden Bauteilen nicht anlasswärmebehandelt bzw. wärmenachbehandelt werden müssen.

Im nächsten Verfahrensschritt werden die für die Ausbiegungen 3 und Verbindungsrohre 4 bereitgestellten geraden Rohre mit dafür geeigneten Werkzeugen, beispielsweise Biegepressen, zu Ausbiegungen 3 sowie Verbindungsrohren 4 verarbeitet. In der Regel weisen die Ausbiegungen 3 einen 180° Bogen und die Verbindungsrohre 4 einen Bogen von 90° auf. Für das spätere Verschweißen der Geradrohre 2 mit den Ausbiegungen 3 sowie den Verbindungsrohren 4 sind an deren jeweiligen Enden Anschweißfasen vorgesehen.

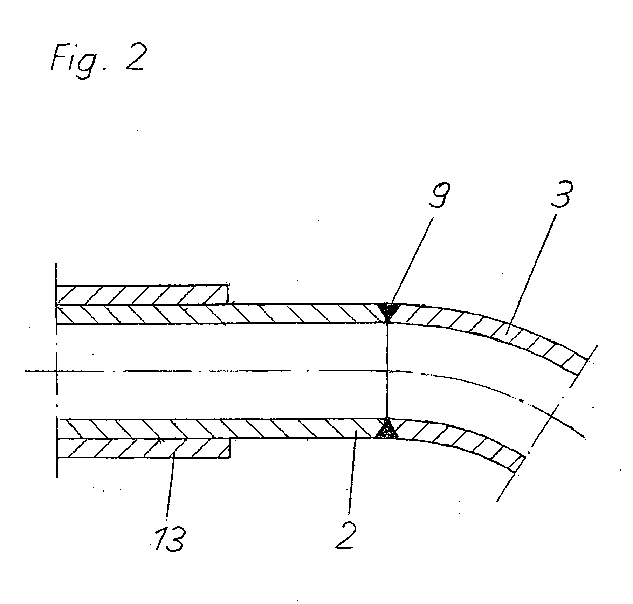

Im folgenden Verfahrensschritt werden die einzelnen Überhitzer-Rohrschlangen 1 gefertigt, indem gemäß Figur 2 die Geradrohre 2 mit den Ausbiegungen 3 mittels Stoß-Schweißnähten 9 werkstattseitig verbunden werden. Ferner werden gemäß Figur 3 außen an den Verbindungsrohren 4 jeweils im Bereich des Durchtrittes 8 der jeweiligen Verbindungsrohre 4 durch die Dampferzeuger-Rohrwand 6 eine aus einem nicht wärmezubehandelnden Werkstoff bestehende Hülse 5 angebracht und mittels Schweißnaht 10 werkstattseitig mit dem Verbindungsrohr 4 verbunden. Die Stelle bzw. Lokalität des Durchtrittbereiches 8 der Verbindungsrohre 4 durch die Rohrwand 6 lässt sich vorab leicht ermitteln, da die Mittenabstände der Rohrwände 6 zueinander sowie die Abmessungen und die Lage der Überhitzer-Rohrschlongen 1 einschließlich der daran befestigten Verbindungsrohre 4 exakt bekannt ist. Somit kann die Lage der Hülse 5 auf dem Verbindungsrohr 4 exakt vorbestimmt werden.

Nach der Herstellung bzw. Fertigstellung der Rohrschlangen 1 sowie der mit Hülsen 5 bestückten Verbindungsrohre 4 in der Werkstatt (werkstattseitig) werden ebenfalls in der Werkstatt im nächsten Verfahrensschritt die Rohrschlangen 1 sowie die mit Hülsen 5 bestückten Verbindungsrohre 4 in einer nicht dargestellten ersten Heizeinrichtung ausscheidungsgehärtet. Als erste Heizeinrichtung wird in der Regel ein aufgrund der Abmessungen der Rohrschlangen 1 bzw. der mit Hülsen 5 bestückten Verbindungsrohre 4 hierfür angepasster Ofen benutzt, in dem die Rohrschlangen 1 sowie die mit Hülsen 5 bestückten Verbindungsrohre 4 einzeln oder zu mehreren wärmebehandelt werden. Damit ist erfindungsgemäß dafür gesorgt, dass die in der Werkstatt gefertigten Rohrschlangen 1 und deren Stoß-Schweißnähte 9 sowie die mit Hülsen 5 bestückten Verbindungsrohre 4 und deren Schweißnähte 10 bereits werkstattseitig ausscheidungsgehärtet werden und es somit diesbezüglich auf der Baustelle montageseitig keines weiteren Aufwandes mehr bedarf. Die Ausscheidungshärtung der obengenannten Bauteile und Schweißnähte innerhalb der ersten Heizeinrichtung wird vorteilhaft bei einer Temperatur von 785° bis 815° C und weiter vorteilhaft über eine Zeitspanne von etwa 4 Stunden vorgenommen, wobei dies im Minutenbereich abweichen kann.

Nach Fertigstellung des vorgenannten Verfahrensschrittes können die Rohrschlangen 1 sowie die mit Hülsen 5 bestückten Verbindungsrohre 4 auf die Baustelle gebracht werden, wo sie in einen nicht dargestellten Dampferzeuger eingebaut und dabei die beiden Bauteile miteinander verbunden werden. Dazu werden im nächsten Verfahrensschritt die mit Hülsen 5 bestückten Verbindungsrohre 4 auf der Baustelle, d.h. montageseitig, in die zwischenzeitig bereits erstellten und montierten Rohrwände 6 eines nicht dargestellten Dampferzeugers hindurchgeführt. Hierzu sind gemäß Figur 3 an den Durchtrittsbereichen 8 der Rohrwände 6 Hülsen 7 oder Füllbleche 15 für die Aufnahme der Verbindungsrohre 4 bzw. deren Hülsen 5 vorgesehen. Zwecks vereinfachter Montage bzw. Verbindung der Verbindungsrohre 4 sowie deren Hülsen 5 mit der Rohrwand 6 sind die mit der Rohrwand 6 verbundenen Hülsen 7 oder Füllbleche 15 aus einem nicht wärmezubehandelnden Werkstoff vorgesehen. Nach der Hindurchführung der Verbindungsrohre 4 und deren Hülsen 5 durch die Rohrwand 6 bzw. deren Hülsen 7 oder Füllbleche 15 wird das Verbindungsrohr 4 mit der Überhitzer-Rohrschlange 1 mittels Stoß-Schweißnaht 11 und anschließend die Hülse 5 des Verbindungsrohres 4 mit der Hülse 7 (obere Hälfte des Längsschnittes der Figur 3) oder dem Füllblech 15 (untere Hälfte des Längsschnittes der Figur 3) der Rohrwand 6 mittels Schweißnaht 12 montageseitig verbunden.

Abschließend werden die Stoß-Schweißnähte 11 auf der Baustelle, d.h. montageseitig, mittels lokal an den Schweißnähten 11 angebrachten zweiten Heizeinrichtungen 14 (siehe zweite Heizeinrichtung 14 strichliert dargestellt in Figur 3) ausscheidungsgehärtet. Die Größe des Ausscheidungshärtungsbereiches und deren Parameter werden entsprechend den Anforderungen vorab festgelegt, d.h. der Wärmeeinbringbereich, die Aufheiz- und Abkühlgradienten werden vorab exakt definiert. Wie bei der Ausscheidungshärtung der Schweißnähte 9, 10 in der Werkstatt wird auch hier die Ausscheidungshärtung vorteilhaft bei einer Temperatur von 785° bis 815° C und weiter vorteilhaft über eine Zeitspanne von etwa 4 Stunden vorgenommen, wobei dies im Minutenbereich abweichen kann. Bei der zweiten Heizeinrichtung 14 kann es sich um geometrisch angepasste und lokal eingesetzte Widerstands-Glühkassetten handeln, die den Bereich der Schweißnaht 11 wärmebehandeln bzw. ausscheidungshärten.

Die Schweißnähte 12 der montageseitigen Verbindung der Hülsen 5 (Verbindungsrohr 4) mit den Hülsen 7 oder Füllbleche 15 (Rohrwand 6) brauchen nicht wärmebehandelt werden, da erfindungsgemäß Hülsen 5 auf die Verbindungsrohre 4 aufgesetzt worden sind, die aus einem Werkstoff bestehen, der nach dem Verschweißen nicht wärmebehandelt werden muss. Gleiches bezüglich Werkstoff trifft auf die bereits bei der Fertigung der Rohrwand 6 in die Rohrwand 6 eingesetzten Hülsen 7 oder Füllbleche 15 zu.

Um bei der Verschweißung der Rohre aus ausscheidungshärtender Nickelbasislegierung, d.h. der Geradrohre 2 mit den Ausbiegungen 3 (Schweißnähte 9) bzw. der Überhüzer-Rohrschlangen 1 und somit der Geradrohre 2 mit den Verbindungsrohren 4 (Schweißnähte 11) die bei der Schweißung auftretende Wärme besser und schneller abzuführen, können im Nahbereich bzw. an den Peripherien der besagten Schweißnähte 9 und 11 nicht dargestellte Kühlelemente angebracht werden. Dies können beispielsweise Rohre sein, die um die Geradrohre 2, Ausbiegungen 3 bzw. Verbindungsrohre 4 gewickelt sind und ein Kühlmedium führen. Durch die bessere und schnellere Abführung der bei der Schweißung auftretenden Wärme wird an den Rohren aus ausscheidungshärtender Nickelbasislegierung Wärmestau verhindert und dadurch Heißrisse vermieden.

Für die Geradrohre 2, Ausbiegungen 3 und Verbindungsrohre 4 aus ausscheidungshärtendem Werkstoff wird vorzugsweise Alloy 740 von Special Metals oder Alloy 263 (Werkstoff Nr. 2.4650) eingesetzt. Der Werkstoff Alloy 740 besitzt zurzeit weder eine europäische Werkstoffzulassung noch eine VdTÜV-Zulassung und wird über Einzelgutachten für den Einsatz in Dampfkraftwerken bzw. Dampferzeugern qualifiziert.

Für die aus einem nicht wärmezubehandelnden Werkstoff bestehenden Bauteile (Hülsen 5, Hülsen 7, Füllbleche 15) wird vorzugsweise Alloy 617mod (NiCr23Co12Mo mod.) oder Alloy 617 (NiCr23Co12Mo) eingesetzt.

Für das Verschweißen der aus ausscheidungshärtendem Werkstoff bestehenden Geradrohre 2, Ausbiegungen 3 und Verbindungsrohre 4 untereinander wird vorzugsweise ein artgleicher Schweißzusatzwerkstoff verwendet.

Für das Verschweißen der aus einem nicht wärmezubehandelnden Werkstoff bestehenden Hülsen 5 und Hülsen 7 oder Füllbleche 15 untereinander wird vorzugsweise ein artgleicher Schweißzusatzwerkstoff verwendet.

Für das Verschweißen der aus ausscheidungshärtendem Werkstoff bestehenden Verbindungsrohre 4 mit den aus einem nicht wärmezubehandelnden Werkstoff bestehenden Hülsen 5 wird vorzugsweise ein nicht wärmezubehandelnder Schweißzusatzwerkstoff verwendet.

Für den Fall, dass das oberste und unterste Geradrohr 2 der Rohrschlangen 1 gegen Erosion geschützt werden soll, können auf die entsprechenden Rohre der Rohrschlangen 1 vorteilhaft Panzerungen 13 aufgebracht werden. Das Aufbringen dieser Panzerung 13 geschieht vorteilhaft mit der Fertigung der einzelnen Rohrschlangen 1 (Verfahrensschritt c)), wobei als Panzerung 13 entweder Hülsen auf das Geradrohr 2 aufgeschrumpft werden oder das Geradrohr 2 eine mehrere Millimeter starke Auftragschweißung erfährt. Als Werkstoff für die Panzerung 13 kann eine Nickelbasislegierung oder hitzebeständige Chrom-Nickel-Stähle verwendet werden.

Alternativ bzw. zusätzlich können die Ausbiegungen 3 und die gebogenen Verbindungsrohre 4 nach deren Fertigung und vor der Fertigung der einzelnen Rohrschlangen 1 vorzugsweise in einer nicht dargestellten dritten Heizeinrichtung bei einer Temperatur von 1105 bis 1135° C und zeitlich über wenige Minuten lösungsgeglüht werden. Hierfür kann ein dazu angepasster und nicht dargestellter Ofen benutzt werden. Damit können Einflüsse auf das Werkstoffgefüge aus der Kaltverformung eliminiert werden.

### Bezugszeichenliste:

- 1: Überhitzer-Rohrschlange
- 2: Geradrohr
- 3: Ausbiegung
- 4: Verbindungsrohr
- 5: Hülse
- 6: Rohrwand
- 7: Hülse in Rohrwand
- 8: Durchtrittsbereich durch Rohrwand
- 9: Stoß-Schweißnaht, werkstattseitig
- 10: Schweißnaht, werkstattseitig
- 11: Stoß-Schweißnaht, montageseitig
- 12: Schweißnaht, montageseitig
- 13: Panzerung
- 14: Zweite Heizeinrichtung
- 15: Füllblech am Rohrdurchtritt

## Patentansprüche

1. Verfahren zur Herstellung von Überhitzer-Rohrschlangen und deren Verbindungsrohre sowie deren Montage innerhalb der Dampferzeuger-Rohrwände ( 6 ), wobei die Rohrschlangen ( 1 ) wenigstens jeweils aus Geradrohren ( 2 ) und Ausbiegungen ( 3 ) gebildet sind und die Verbindungsrohre ( 4 ) wenigstens jeweils mit einer auf der Außenseite des Verbindungsrohres ( 4 ) angebrachten Hülse ( 5 ) ausgebildet sind, wobei das Verfahren die folgenden Schritte umfasst,
a) Bereitstellen der Geradrohre ( 2 ), der Rohre für die Ausbiegungen ( 3 ) und der Rohre für die Verbindungsrohre ( 4 ) aus ausscheidungshärtenden Nickelbasislegierungen und in lösungsgeglühtem Zustand sowie der aus einem nicht wärmezubehandelnden Werkstoff bestehenden Hülsen ( 5 ) werkstattseitig,
b) Fertigung der Ausbiegungen ( 3 ) und der Verbindungsrohre ( 4 ) mittels Biegewerkzeugen werkstattseitig,
c) Fertigung der einzelnen Rohrschlangen ( 1 ) durch Verbinden der Geradrohre ( 2 ) und der Ausbiegungen ( 3 ) mittels Schweißnähte ( 9 ) sowie Verbinden der Hülsen ( 5 ) mit den Verbindungsrohren ( 4 ) im Bereich des Durchtrittes ( 8 ) des Verbindungsrohres ( 4 ) durch die Dampferzeuger-Rohrwand ( 6 ) mittels Schweißnähte ( 10 ) werkstattseitig,
d) Ausscheidungshärten der Rohrschlangen ( 1 ) und der mit Hülsen ( 5 ) versehenen Verbindungsrohre ( 4 ) in einer ersten Heizeinrichtung werkstattseitig,
e) montageseitiges Verbinden der Rohrschlangen ( 1 ) mit den Verbindungsrohren ( 4 ) mittels Schweißnaht ( 11 ) innerhalb der Dampferzeuger-Rohrwände ( 6 ) sowie der Hülsen ( 5 ) mit den in den Dampferzeuger-Rohrwänden ( 6 ) vorbereiteten und aus einem nicht wärmezubehandelnden Werkstoff bestehenden Aufnahmemittel ( 7, 15 ) mittels Schweißnaht ( 12 ) und
f) Ausscheidungshärten der Schweißnähte ( 11 ) mittels lokal an den Schweißnähten ( 11 ) angeordnete zweite Heizeinrichtungen ( 14 ) montageseitig.

2. Verfahren nach Anspruch 1, **dadurch gekennzeichnet, dass** die Ausbiegungen ( 3 ) und die gebogenen Verbindungsrohre ( 4 ) nach deren Fertigung und vor der Fertigung der einzelnen Rohrschlangen ( 1 ) in einer dritten Heizeinrichtung werkstattseitig lösungsgeglüht werden.

3. Verfahren nach Anspruch 1 oder 2, **dadurch gekennzeichnet, dass** zusätzlich zur Fertigung der einzelnen Rohrschlangen ( 1 ) gemäß Verfahrensschritt c) das oberste und unterste Geradrohr ( 2 ) einer Rohrschlange ( 1 ) mit einer Panzerung ( 13 ) ausgebildet wird.

4. Verfahren nach Anspruch 1, **dadurch gekennzeichnet, dass** das Ausscheidungshärten bei einer Temperatur von 785 bis 815° C erfolgt und sich zeitlich über etwa 4 Stunden erstreckt.

5. Verfahren nach Anspruch 2, **dadurch gekennzeichnet, dass** das Lösungsglühen bei einer Temperatur von 1105 bis 1135° C erfolgt und sich zeitlich über wenige Minuten erstreckt.

6. Verfahren nach Anspruch 1, **dadurch gekennzeichnet, dass** als Aufnahmemittel eine Hülse ( 7 ) oder ein Füllblech ( 15 ) bereitgestellt wird.

7. Verfahren nach Anspruch 1, **dadurch gekennzeichnet, dass** für das Verschweißen der aus ausscheidungshärtenden Nickelbasislegierungen bestehenden Geradrohren ( 2 ), Ausbiegungen ( 3 ) und Verbindungsrohren ( 4 ) untereinander ein artgleicher Schweißzusatzwerkstoff verwendet wird.

8. Verfahren nach Anspruch 1, **dadurch gekennzeichnet, dass** für das Verschweißen der aus einem nicht wärmezubehandelnden Werkstoff bestehenden Hülsen ( 5 ) und Aufnahmemittel (7, 15 ) ein artgleicher Schweißzusatzwerkstoff verwendet wird.

9. Verfahren nach Anspruch 1, **dadurch gekennzeichnet, dass** für das Verschweißen der aus ausscheidungshärtenden Nickelbasislegierungen bestehenden Verbindungsrohre ( 4 ) mit den aus einem nicht wärmezubehandelnden Werkstoff bestehenden Hülsen ( 5 ) ein nicht wärmezubehandelnder Schweißzusatzwerkstoff verwendet wird.

10. Verfahren nach Anspruch 1, **dadurch gekennzeichnet, dass** die mittels Stoß-Schweißnähte ( 9, 11 ) zu verbindenden Geradrohre ( 2 ), Ausbiegungen ( 3 ) und Verbindungsrohre ( 4 ) an den Peripherien der Stoß-Schweißnähte ( 9, 11 ) und während der Schweißung mittels Kühlelementen gekühlt werden.

## Claims

1. Method for producing superheater tubes and their connecting pipes, as well as their assembly inside the steam generator tube walls (6), whereby each of the superheater tubes (1) is at least formed from straight tubes (2) and bends (3) and each of the connecting pipes (4) is at least constructed with a sleeve (5) mounted on the outside of the connecting pipe (4), whereby the method includes the following steps,
a) preparation in the workshop of the straight tubes (2), the tubes for the bends (3) and the tubes for the connecting pipes (4) from precipitation-hardened nickel-based alloys and in a solution-annealed state, as well as sleeves (5) made of a material that is not to be heat treated,
b) manufacture in the workshop of the bends (3) and the connecting pipes (4) by means of bending tools,
c) manufacture in the workshop of the individual superheater tubes (1) by connecting the straight tubes (2) and the bends (3) by means of weld seams (9) and connecting the sleeves (5) with the connecting pipes (4) in the penetration area (8) of the connecting pipe (4) at the steam generator tube wall (6) by means of weld seams (10),
d) precipitation hardening in the workshop, in a first heating device, of the superheater tubes (1) and the connecting pipes (4) that are provided with sleeves (5),
e) connecting on the assembly site of the superheater tubes (1) with the connecting pipes (4) by means of a weld seam (11) inside the steam generator tube walls (6), as well as the sleeves (5) with the take-up means (7, 15) that have been prepared in the steam generator tube walls (6) and that are made of a material that is not to be heat treated by means of a weld seam (12), and
f) precipitation hardening on the assembly site of the weld seams (11) by means of second heating devices (14) arranged locally at the weld seams (11).

2. Method according to Claim 1, **characterized in that** after their manufacture and prior to the manufacture of the individual superheater tubes (1), the bends (3) and the bent connecting pipes (4) are solution annealed in the workshop.

3. Method according to Claim 1 or 2, **characterized in that** in addition to the manufacture of the individual superheater tubes (1), in accordance with method step c) the top and bottom straight tubes (2) of a superheater tube (1) are constructed with a wear-resistant layer (13).

4. Method according to Claim 1, **characterized in that** the precipitation hardening takes place at a temperature of 785°C to 815°C and extends over a period of time of about 4 hours.

5. Method according to Claim 2, **characterized in that** the solution annealing takes place at a temperature of 1105°C to 1135°C and extends over a period of time of a few minutes.

6. Method according to Claim 1, **characterized in that** a sleeve (7) or a filler plate (15) is prepared as a take-up means.

7. Method according to Claim 1, **characterized in that** a welding filler material of the same kind is used for welding to each other the straight tubes (2), bends (3) and connecting pipes (4) that are made of precipitation-hardened nickel-based alloys.

8. Method according to Claim 1, **characterized in that** a welding filler material of the same kind is used for welding to each other the sleeves (5) and take-up means (7, 15) that are made of a material that is not to be heat treated.

9. Method according to Claim 1, **characterized in that** a welding filler material made of a material that is not to be heat treated is used for welding the connecting pipes (4) that are made of a precipitation-hardened material with the sleeves (5) that are made of a material that is not to be heat treated.

10. Method according to Claim 1, **characterized in that** the straight tubes (2), bends (3) and connecting pipes (4) that are to be connected by means of butt welds (9, 11) are cooled at the peripheries of the butt welds (9, 11) and during the welding by means of cooling elements.

## Revendications

1. Procédé pour fabriquer des serpentins de surchauffeur et leurs tuyaux de liaison et leur montage à l'intérieur des parois tubulaires du générateur de vapeur (6), les serpentins (1) étant formés au moins respectivement de tuyaux droits (2) et de parties courbées (3) et les tuyaux de liaison (4) étant réalisés au moins respectivement avec une douille (5) placée sur le côté extérieur du tuyau de liaison (4), le procédé comprenant les étapes suivantes,
a) mise à disposition des tuyaux droits (2), des tuyaux pour les parties courbées (3) et des tuyaux pour les tuyaux de liaison (4) constitués d'alliages à base de nickel durcissant à la précipitation et dans l'état de recuit de mise en solution ainsi que des douilles (5) à base d'un matériau n'ayant pas à subir un traitement thermique côté atelier,
b) fabrication des parties courbées (3) et des tuyaux de liaison (4) au moyen d'outils de cintrage côté atelier,
c) fabrication des différents serpentins (1) par assemblage des tuyaux droits (2) et des parties courbées (3) au moyen de cordons de soudure (9) et assemblage des douilles (5) avec les tuyaux de liaison (4) dans la zone du passage (8) du tuyau de liaison (4) à travers la paroi tubulaire du générateur de vapeur (6) au moyen de cordons de soudure (10) côté atelier,
d) durcissement par précipitation des serpentins (1) et des tuyaux de liaison (4) dotés de douilles (5) dans un premier dispositif de chauffage côté atelier,
e) assemblage côté montage des serpentins (1) avec les tuyaux de liaison (4) par cordon de soudure (11) à l'intérieur des parois tubulaires du générateur de vapeur (6) et des douilles (5) avec les moyens de logement (7, 15) préparés dans les parois tubulaires du générateur de vapeur (6) et à base d'un matériau n'ayant pas à subir un traitement thermique par cordon de soudure (12) et
f) durcissement par précipitation des cordons de soudure (11) au moyen de seconds dispositifs de chauffage (14) disposés localement sur les cordons de soudure (11) côté montage.

2. Procédé selon la revendication 1, **caractérisé en ce que** les parties courbées (3) et les tuyaux de liaison (4) cintrés font l'objet d'un recuit de mise en solution côté atelier dans un troisième dispositif de chauffage après leur fabrication et avant la fabrication des différents serpentins (1).

3. Procédé selon la revendication 1 ou 2, **caractérisé en ce que**, en supplément de la fabrication des différents serpentins (1) selon l'étape de procédé c), le tuyau droit du dessus et le tuyau droit (2) du dessous d'un serpentin (1) sont réalisés avec un blindage (13)

4. Procédé selon la revendication 1, **caractérisé en ce que** le durcissement par précipitation s'effectue à une température de 785 à 815 °C et s'étend dans le temps sur environ 4 heures.

5. Procédé selon la revendication 2, **caractérisé en ce que** le recuit de mise en solution s'effectue à une température de 1105 jusqu'à 1135 °C et s'étend dans le temps sur quelques minutes.

6. Procédé selon la revendication 1, **caractérisé en ce qu'**une douille (7) ou une tôle de remplissage (15) est mise à disposition comme moyen de logement.

7. Procédé selon la revendication 1, **caractérisé en ce qu'**un matériau d'apport du même type est utilisé pour le soudage entre eux des tuyaux droits (2), des parties courbées (3) et des tuyaux de liaison (4) constitués d'alliages à base de nickel durcissant par précipitation.

8. Procédé selon la revendication 1, **caractérisé en ce qu'**un matériau d'apport du même type est utilisé pour le soudage des douilles (5) et moyens de logement (7, 15) à base d'un matériau qui n'a pas à subir un traitement thermique.

9. Procédé selon la revendication 1, **caractérisé en ce qu'**un matériau d'apport n'ayant pas à subir un traitement thermique est utilisé pour le soudage des tuyaux de liaison (4) constitués d'alliages à base de nickel durcissant par précipitation avec les douilles (5) à base d'un matériau n'ayant pas à subir un traitement thermique.

10. Procédé selon la revendication 1, **caractérisé en ce que** les tuyaux droits (2), les parties courbées (3) et tuyaux de liaison (4) à relier au moyen de cordons de soudure par électropercussion (9, 11) sont refroidis sur les périphéries des cordons de soudure par électropercussion (9, 11) et pendant le soudage au moyen d'éléments de refroidissement.
